# EUROPÄISCHE PATENTSCHRIFT

(11) **EP 3 275 557 B1**
(45) Veröffentlichungstag und Bekanntmachung des Hinweises auf die Patenterteilung: **15.04.2020**
(21) Anmeldenummer: 17183324.7
(22) Anmeldetag: 26.07.2017
(51) Int. Cl.: B05B 13/04, B25J 5/02

(54) **LACKIERKABINE**
PAINT BOOTH ASSEMBLY
CABINE DE PEINTURE

(30) Priorität: 26.07.2016 DE 202016104090 U
(43) Veröffentlichungstag der Anmeldung: 31.01.2018
(73) Patentinhaber: Wilbers-Lifting GmbH, 48455 Bad Bentheim (DE)
(72) Erfinder: WILBERS, Henricus Hermanus Macarius, 48455 Bad Bentheim (DE)
(74) Vertreter: Griepenstroh, Jörg

(56) Entgegenhaltungen:
- DE-A1-102004 049 529
- DE-A1-102014 012 595
- DE-T2- 69 403 485
- JP-U- H0 717 353
- US-A- 3 478 720
- US-A1- 2012 288 973

## Beschreibung

Die vorliegende Erfindung betrifft eine Lackierkabine gemäß den Merkmalen im Oberbegriff von Anspruch 1.
Aus dem Stand der Technik ist es bekannt verschiedene Produkte beispielsweise aus Kunststoff oder Metall zu lackieren. Es gibt verschiedene Arten der Lackierung. Beispielsweise kann eine Tauchlackierung durchgeführt werden. Oftmals werden Produkte jedoch auch mittels Spritzen oder Sprühen lackiert. Hierzu wird das Produkt zum Lackieren bereitgestellt und mittels einer Lackierdüse der Lack aufgesprüht, beziehungsweise aufgespritzt. Siehe hierzu US2012/288973.
In der industriellen Fertigung wird ein solches Lackieren nicht manuell durchgeführt sondern in einer automatisierten Lackierkabine. In einem Lackierraum der Lackierkabine herrscht insbesondere ein Unterdruck. Hierdurch werden Verschmutzungen, beispielsweise Staub jedoch auch der beim Lackieren entstehende Sprühnebel abgesaugt. Das Produkt kann somit mit hoher Qualität lackiert werden.

Aufgabe der vorliegenden Erfindung ist es, eine Lackierkabine bereitzustellen, in welcher verlagerbare Lackierdüsen angeordnet sind und gleichzeitig eine verbesserte Dichtungsfunktion innerhalb eines Lackierraums bereit gestellt ist.

Die zuvor genannte Aufgabe wird bei einer Lackierkabine mit den Merkmalen im Anspruch 1 gelöst.

Vorteilhafte Ausgestaltungsvarianten der vorliegenden Erfindung sind in den abhängigen Ansprüchen beschrieben.

Die Lackierkabine weist einen Lackierraum auf, wobei in dem Lackierraum ein Unterdruck vorhanden ist und in einem dem Lackierraum benachbarten Maschinenraum ein Überdruck vorhanden ist. In dem Lackierraum selbst ist mindestens eine auf einer Schiene verlagerbare Lackierdüse angeordnet.

Die Lackierkabine zeichnet sich erfindungsgemäß dadurch aus, dass die Schiene im Querschnitt zumindest längenabschnittsweise zweiteilig ausgebildet ist, wobei zwischen den zwei Teilen eine sich in Längsrichtung erstreckende Öffnung ausgebildet ist. In der Öffnung ist ein Schlitten zur Aufnahme der Lackierdüse verlagerbar angeordnet. Beidseitig des Schlittens ist ein ebenfalls in Axialrichtung der Schiene verlagerbares Band angeordnet, so dass bei axialer Verlagerung des Schlittens auch das Band verlagert wird und dabei die Öffnung der Schiene abgedichtet ist.

Durch das erfindungsgemäße Band welches auch als Dichtungsband bezeichnet werden kann, wird es somit ermöglicht, dass die in der Schiene vorhandene Öffnung zur axialen Verlagerung des Schlittens, im Betrieb ebenfalls abgedeckt und somit abgedichtet ist. Der in dem Lackierraum vorherrschende Unterdruck wird somit nicht durch den Umgebungsdruck in einer Montagehalle, beziehungsweise durch den in dem Maschinenraum herrschenden Überdruck ausgeglichen. Insbesondere dichtet dazu das Band druckdicht ab. Die zum Lackieren benötigten jeweiligen Drücke werden somit durch das Band im Lackierraum sowie im Maschinenraum gehalten.

Auftretende Verschmutzungen können ebenfalls aufgrund der Abdeckbeziehungsweise Dichtfunktion des Bandes nicht in den Lackierraum und auch nicht in den Maschineraum gelangen.

Weiterhin besonders bevorzugt ist vorgesehen, dass an einem Boden bzw. Grund des Lackierraumes eine Absauganlage angeordnet ist. In einem oberen Bereich, insbesondere in einem Deckenbereich ist ferner eine Filteranlage angeordnet, so dass ein Überdruck, insbesondere ein Überdruck des Maschinenraumes in den Lackierraum geblasen wird. Dies sorgt dafür, dass insbesondere Sprühnebel und/oder Lackpartikel auf die Vertikalrichtung bezogen nach unten und damit insbesondere auf das zu lackierende Gut, gedrückt werden. Dies verbessert das Lackierergebnis bzw. insbesondere die Farb- bzw. Lackdicke auf dem zu lackierenden Gut. Überschüssige Partikel können gleichsam mit der Absauganlage abgeführt werden. In Verbindung mit der Filteranlage im oberen Bereich werden dann die Farbpartikel auf das zu lackierende Gut zubewegt und können an diesem anhaften.

Im Bereich der Enden der Schiene sind Umlenkrollen angeordnet. Das Band ist umlaufend ausgebildet. Eine translatorische Bewegung des Schlittens innerhalb der Schiene kann somit ebenfalls von dem Band ausgeführt werden. Somit ist sichergestellt, dass bei jeder einzunehmenden Position des Schlittens in Längsrichtung der Schiene, die vorhandene Öffnung in der Schiene durch das Band abgedeckt, beziehungsweise abgedichtet ist. Das Band ist entweder umlaufend geschlossen ausgebildet und der Schlitten ist dann an das Band angesetzt beziehungsweise aufgesetzt. Sofern das Band nicht in sich umlaufend geschlossen ausgebildet ist, können die jeweiligen Enden des Bandes an jeder Seite des Schlittens festgelegt werden. Im Ergebnis wird dann auch ein umlaufendes Band bereitgestellt.

Bevorzugt ist nicht nur eine Schiene mit einer Lackierdüse angeordnet. Es können auch zwei oder mehr Lackierdüsen an einer Schiene angeordnet sein. Es können jedoch auch mehrere Schienen mit jeweils einer oder auch mehreren Lackierdüsen in der Lackierkabine angeordnet sein.

Zur axialen Verlagerung ist bevorzugt ein Antrieb vorgesehen. Der Antrieb kann dabei unmittelbar mit dem Schlitten verbunden sein, beispielsweise über eine Antriebskette. Der Antrieb kann jedoch auch mit dem Band gekoppelt sein. Eine Bewegung des Antriebes wird dann über das Band an den Schlitten übertragen. In dem Fall hat das Band eine Antriebsfunktion und auch eine Dichtfunktion.

Weiterhin besonders bevorzugt ist im Rahmen der Erfindung eine Spannvorrichtung, insbesondere nach dem Prinzip eines Kettenspanners bzw. Spannrolle vorgesehen. Damit kann eine benötigte Spannung auf das Band aufgebracht werden, so dass zum einen die Antriebskraft übertragen werden kann, zum anderen das Band entsprechend in seinen Führungen geführt ist. Darüber hinaus bietet die Spannrolle die Möglichkeit, während des Betriebes die Spannung auf das Band aufzubringen und insbesondere nachzustellen bzw. nachzujustieren, so dass ein auftretender Verschleiß beispielsweise eine Längendehnung des Bandes kompensiert werden kann. Gleichzeitig bietet es die Möglichkeit bei Wartungsarbeiten oder Austauscharbeiten, beispielsweise der Lackierdüse und/oder des Schlittens, die Spannung vom Band zu nehmen, die Wartungsarbeiten durchzuführen und im Anschluss wiederum das Band zu spannen.

Das Band ist insbesondere aus einem gummiartigen Werkstoff, beispielsweise einem elastomeren Werkstoff ausgebildet. Das Band kann jedoch auch aus einem Kunststoffwerkstoff ausgebildet sein. Auch kann beispielsweise das Band formschlüssige Eingriffsmittel aufweisen, beispielsweise eine Sägezahnprofilierung, so dass eine Drehbewegung des Antriebes an das Band besser übertragen wird.

Weiterhin bevorzugt ist das Band in einem oberen Teil und einem unterem Teil der Schiene geführt. Hierzu weist die Schiene beispielsweise eine Nut auf, in die das Band zumindestens bereichsweise eingreifend ausgebildet ist.

Das Band kann weiterhin besonders bevorzugt eine Antihaftbeschichtung aufweisen, insbesondere an einer dem Lackierraum zugewandten Außenseite des Bandes. Diese Antihaftbeschichtung kann beispielsweise auf Basis von Teflon ausgebildet sein. Dies bietet insbesondere den Vorteil, dass Farbpartikel nicht anhaften. Die Bandbewegung wird somit auch nach intensivem Einsatz nicht durch anhaftende Farbpartikel eingeschränkt. Gleichzeitig kann die Antihaftbeschichtung auch insbesondere im Falle eines Kunststoff- und/oder gummiartigem Bandes eine Schutz- bzw. Schmierfunktion übernehmen. Die Alterung des Bandes kann dadurch verzögert werden.

Die formschlüssige Führung des Bandes in einem oberen Teil und in einem unteren Teil der Schiene kann weiterhin bevorzugt auch dichtend, insbesondere gasdicht beziehungsweise druckdicht ausgebildet sein. Durch einen Überdruck in dem Maschinenraum kann das Band gegen eine Führung gedrückt werden, so dass eine zusätzliche Dichtwirkung eintritt.

Weiterhin besonders bevorzugt ist die Schiene derart ausgebildet, dass zwei gegenüberliegende Profilschienen, insbesondere aus metallischem Werkstoff, welche insbesondere eine U- oder C- förmige Querschnittskonfiguration aufweisen, angeordnet sind. In diesen Profilschienen selbst ist dann je eine Kunststoffschiene eingesetzt. Diese Kunststoffschiene selbst greift zum einen im Querschnitt formschlüssig in die Profilschiene ein und ist von dieser gehalten. Ferner weist die Kunststoffschiene weiterhin besonders bevorzugt eine Nut auf, wobei das Band in der Nut geführt ist, so dass eine Bewegung in Axialrichtung ausgeführt werden kann. Gleichzeitig dient die Nut mit dem Band als formschlüssige Dichtung, so dass kein Druck und/oder Schmutz- oder Farbpartikel von dem Maschinenraum in den Lackierraum bzw. umgekehrt gelangen kann. Durch den Kunststoffwerkstoff der Kunststoffschiene wird eine gleitende Bewegung des Bandes, bei gleichzeitiger formschlüssiger Führung ermöglicht.

Weiterhin besonders bevorzugt ist der Schlitten als Platte ausgebildet und die Platte ist auf dem Band fixiert, insbesondere formschlüssig lagefixiert. Eine zusätzliche Halterung beispielsweise in Form eines Armes kann dann den Schlitten durchgreifen und relativ zu diesem verlagerbar sein. Hierzu ist auf dem Schlitten vorzugsweise weiterhin eine Dichtplatte angeordnet, welche formschlüssig an dem Arm anliegt. Diese Dichtplatte dient zum einen als Führungsfläche, zum anderen gleichzeitig als den Arm umgreifende Dichtungsfläche.

Weiterhin bevorzugt ist durch die Lackierkabine ein Transportband oder eine Rollenbahn geführt. Auf dem Transportband oder der Rollenbahn können die zu lackierenden Gegenstände in den Lackierraum eingeführt werden und auch aus dem Lackierraum heraus geführt werden. Bevorzugt weist der Lackierraum somit an einer Eintrittsseite sowie an einer Austrittsseite entsprechende Türen oder auch Schotts, beziehungsweise Tore auf, welche zum Einführen der Gegenstände in die Lackierkabine geöffnet werden und anschließend während des Lackiervorganges geschlossen sind. Bevorzugt verlaufen Band und Transportband beziehungsweise Band und Rollenbahn orthogonal zueinander. Die Lackierkabine kann auch im Durchlaufbetrieb betrieben werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: zeigt eine perspektivische Ansicht der Führung der Lackierdüsen einer Lackieranlage,
- Figur 2 und 3: zeigen eine Querschnittsansicht durch eine Schiene mit erfindungsgemäß eingesetztem Band,
- Figur 4: zeigt eine Querschnittansicht durch eine erfindungsgemäße Lackieranlage,
- Figur 5 a und b: zeigen eine perspektivische Teilschnittansicht durch die Schiene mit Band,
- Figur 6: zeigt eine perspektivische Teilschnittansicht durch einen Schlitten und
- Figur 7: zeigt eine perspektivische Teilschnittansicht des Bandes in Verbindung mit einer Spannrolle.

In den Figuren werden für gleiche oder ähnliche Bauteile dieselben Bezugszeichen verwendet, auch wenn eine wiederholte Beschreibung aus Vereinfachungsgründen entfällt.

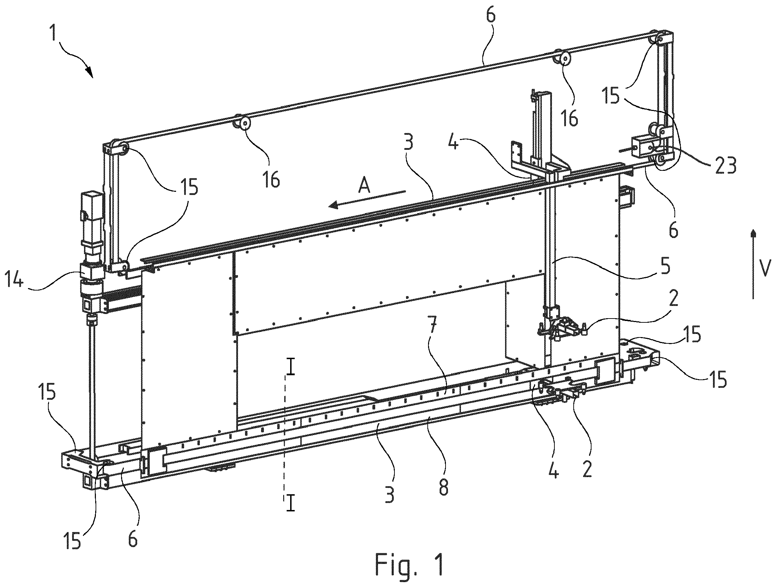

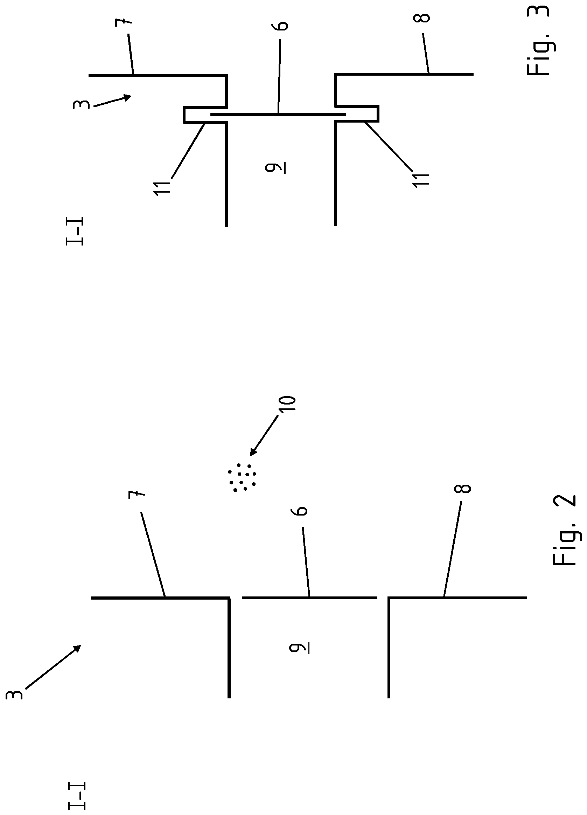

Figur 1 zeigt das mechanische Führungssystem von Lackierdüsen 2 einer angedeuteten Lackierkabine 1. Hierzu sind zwei Schienen 3 vorgesehen, um jeweils eine Lackierdüse 2 in Axialrichtung A verlagern zu können. An der Schiene 3 ist jeweils hierfür ein Schlitten 4 angeordnet. Auf die Bildebene bezogen, an der unteren Schiene 3 ist die Lackierdüse 2 unmittelbar an den Schlitten 4 gekoppelt. Auf die Bildebene bezogen an der oberen Schiene 3 ist eine weitere Halterung 5 vorgesehen, so dass die Lackierdüse 2 mittelbar mit dem Schlitten 4 gekoppelt ist. Die Lackierdüse 2 ist mit der Halterung 5 zusätzlich auf die Vertikalrichtung V bezogen in der Höhe verstellbar und aufgrund des Schlittens 4 in Axialrichtung A verlagerbar. Nunmehr ist erfindungsgemäß vorgesehen, dass ein jeweiliges Band 6 umlaufend angeordnet ist. Das Band 6 verläuft durch eine zwischen einem oberem Teil 7 und einem unterem Teil 8 der Schiene 3 ausgebildeten Öffnung 9 und dichtet diese somit ab. Dies ist insbesondere in Figuren 2 und 3 dargestellt, welche eine Schnittansicht gemäß Schnittlinie I-I aus Figur 1 darstellen.

Hierzu ist zwischen dem oberen Teil 7 und dem unteren Teil 8 der Schiene 3 eine Öffnung 9 ausgebildet und in der Öffnung 9 ist das Band 6 die Öffnung 9 verschließend angeordnet. Schmutzpartikel 10 können somit beispielsweise nicht von der Bildebene bezogen rechten Seite auf die linke Seite durch die Öffnung 9 treten.

Im Unterschied zur Figur 2 ist in der Schiene 3 gemäß Figur 3 im oberem Teil 7 und im unterem Teil 8 jeweils eine Nut 11 ausgebildet, dass Band ist teilweise in die Nut 11 eingreifend angeordnet. Hierdurch wird eine zusätzliche Dichtfunktion bereitgestellt. Insbesondere ist die Dichtfunktion gasdicht beziehungsweise druckdicht.

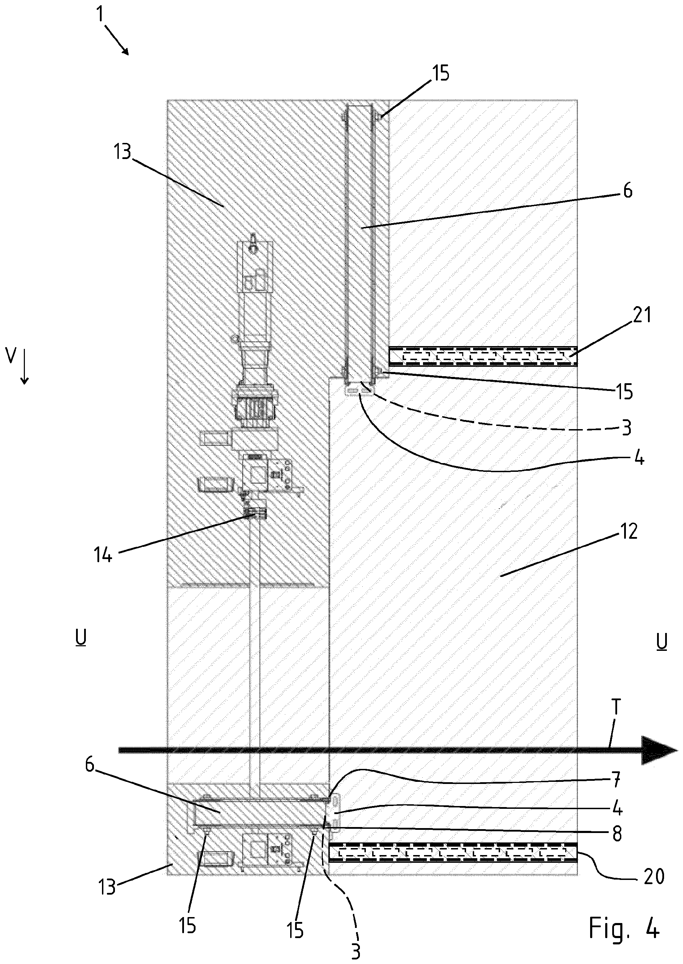

Figur 4 zeigt eine erfindungsgemäße Lackierkabine 1 gemäß Figur 1 in Querschnittsansicht. Hierbei ist ein Lackierraum 12 ausgebildet, sowie ein Maschinenraum 13. In dem Lackierraum 12 herrscht ein Unterdruck, in dem Maschinenraum 13 ein Überdruck. Ebenfalls dargestellt sind die erfindungsgemäßen Bänder 6 an zwei im Lackierraum 12 angeordneten Schienen 3. Das auf die Bildebene bezogene Band 6 in der unteren Schiene 3 wird von einem Antrieb 14 in Form eines Elektromotors angetrieben. Eine axiale Bewegung des Bandes 6 bewirkt zugleich eine ebenfalls axiale Bewegung des unteren Schlittens 4. Die Bänder 6 sind über Umlenkrollen 15 umgelenkt geführt, beziehungsweise über Führungsrollen 16. Weiterhin dargestellt ist ein Transportband T. Dies verläuft quer durch die Lackierkabine 1 und somit quer zur Axialrichtung A.

Damit die Lackierkabine 1, insbesondere der Lackierraum 12, von der Umgebung U abgeschottet beziehungsweise abgedichtet ist, können nicht näher dargestellte Tore oder Schotts an und/oder in dieser angeordnet sein.

Ferner dargestellt ist, auf die Bildebene bezogen, am unteren Ende des Lackierraums 12 eine Absauganlage 20 angeordnet sowie am, auf die Bildebene bezogen oberen Bereich bzw. Deckenbereich, des Lackierraumes 12 eine Filteranlage 21. Damit ist es möglich, dass ein Überdruck des Maschinenraums 13 in den Lackierraum 12 überführt bzw. geblasen wird. Durch die Absauganlage 20 im Bodenbereich des Lackierraums 12 wird dann in dem Lackierraum 12 selbst ein Unterdruck erzeugt. Während des Lackiervorganges sich in dem Lackierraum 12 ausbreitende Farbpartikel, werden somit auf die Vertikalrichtung V bezogen, nach unten gedrückt und insbesondere auf das auf dem Transportband T befindliche Transportgut gedrückt.

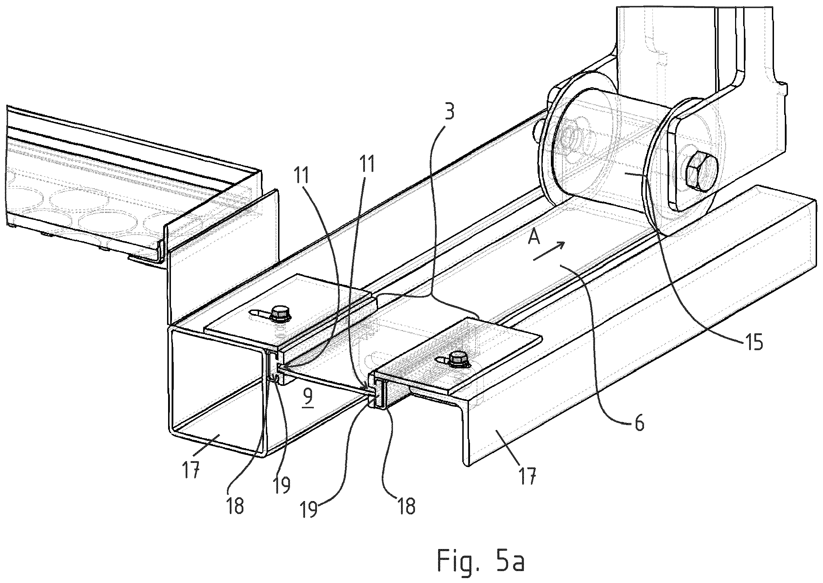

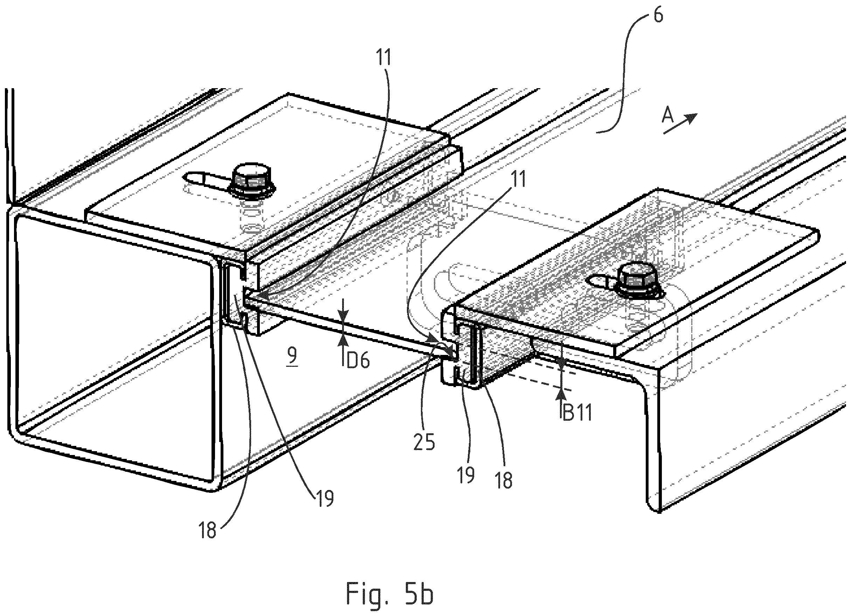

Figur 5a zeigt eine perspektivische Teilschnittansicht an einem erfindungsgemäßen Band 6 in einer Schiene 3. Figur 5b zeigt eine vergrößerte Darstellung von Figur 5a. Das Band 6 wird an einem Eckbereich über eine Umlenkrolle 15 umgelenkt. Je nach Aufbau der Lackieranlage können verschiedene Profile angeordnet sein, an denen die erfindungsgemäße Schiene 3 angeordnet wird. Hierzu ist der beispielsweise in den Figuren 2 und 3 obere Teil 7 und untere Teil 8 der Schiene 3 jeweils durch eine Profilschiene 18 aus metallischem Werkstoff sowie einer formschlüssig darin aufgenommenen Kunststoffschiene 19 aus Kunststoffwerkstoff ausgebildet. Die Profilschiene 18 weist im Querschnitt eine C- bzw. U-förmige Konfiguration auf, wobei die offenen Seiten dieser Konfiguration aufeinander zu zeigend angeordnet sind. Zwischen den zwei Profilschienen 18 befindet sich dann die Öffnung 9. In den metallischen Profilschienen 18 formschlüssig aufgenommen ist eine jeweilige Kunststoffschiene 19. Die Kunststoffschiene 19 weist eine jeweilige Nut 11 auf, wobei in der Nut 11 selbst dann das Band 6 geführt ist, so dass dieses insbesondere in Axialrichtung A verlagerbar ist, gleichzeitig jedoch jeweils orthogonal zur Axialrichtung A eine Führung erfährt. Dadurch dass die Kunststoffschiene 19 insbesondere aus Kunststoffwerkstoff ausgebildet ist, wird eine gleitende Bewegung des Bandes 6 innerhalb der Kunststoffschiene 19 begünstigt. Figur 5a und b zeigen nur einen Teilausschnitt des Bandes 6. Der Schlitten 4 ist auf das Band 6 aufgesetzt und/oder in das Band 6 integriert. An dem Schlitten 4 selbst ist dann die Lackierdüse 2 befestigt.

Weiterhin insbesondere in Figur 5b gut zu erkennen ist, dass die Nut 11 eine Breite B11 aufweist, die größer ist als die Dicke D6 des Bandes 6. Auf die Bildebene bezogen oben in Figur 5b kann ein Überdruck vorherrschen, auf die Bildebene bezogen unten in Figur 5b ein Unterdruck. Folglich kann das Band 6 gegen eine Seitenwange 25 der Nut 11 gedrückt werden und hier formschlüssig anliegen. Die Druckdichtigkeit und/oder Schmutzdichtigkeit wird hierdurch verbessert. Gleichzeitig wird jedoch eine hinreichende Bewegungsfreiheit in Axialrichtung A ermöglicht.

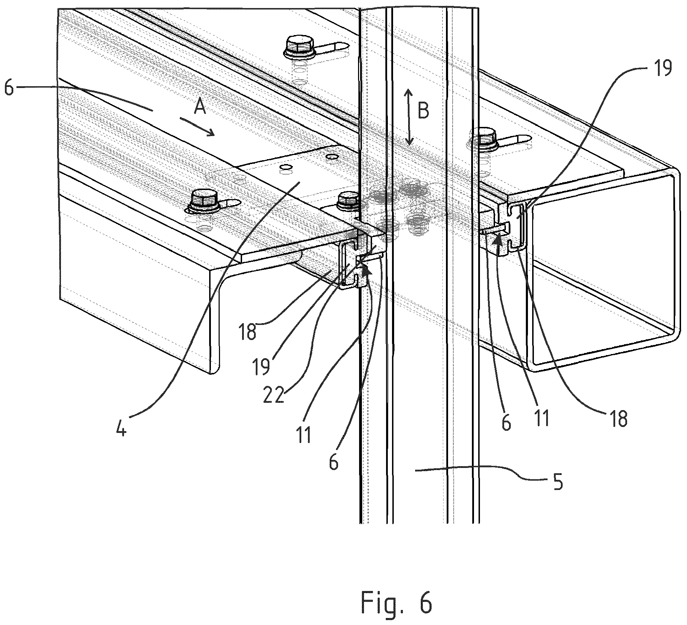

Figur 6 zeigt eine weitere Teilschnittansicht durch ein erfindungsgemäßes Band 6. Hier ist ein Schlitten 4 auf das Band 6 aufgeschraubt. In dem Schlitten 4 befindet sich eine den Schlitten 4 durchgreifende Öffnung, so dass eine Halterung 5 hier in Form eines Armes durch den Schlitten 4 geführt ist. Dazu weist der Schlitten 4 eine Dichtplatte 22 auf. Die Dichtplatte 22 ist bevorzugt auch aus einem Kunststoffwerkstoff ausgebildet. Die Dichtplatte 22 dient somit zum einen als die Außenmantelfläche der Halterung 5 umgreifende Dichtung, jedoch auch als formschlüssige Führung. Das Band 6 selbst bewegt sich in Axialrichtung A. Der Arm bewegt sich in einer Bewegungsrichtung B orthogonal zur Axialrichtung A. Damit ist eine Höhenverlagerung gemäß Figur 1, der auf die Bildebene bezogenen oberen Lackierdüse 2, möglich. Nochmals zu erkennen ist der Aufbau der Schiene 3 mittels Profilschiene 18 sowie in der Profilschiene 18 angeordneter Kunststoffschiene 19.

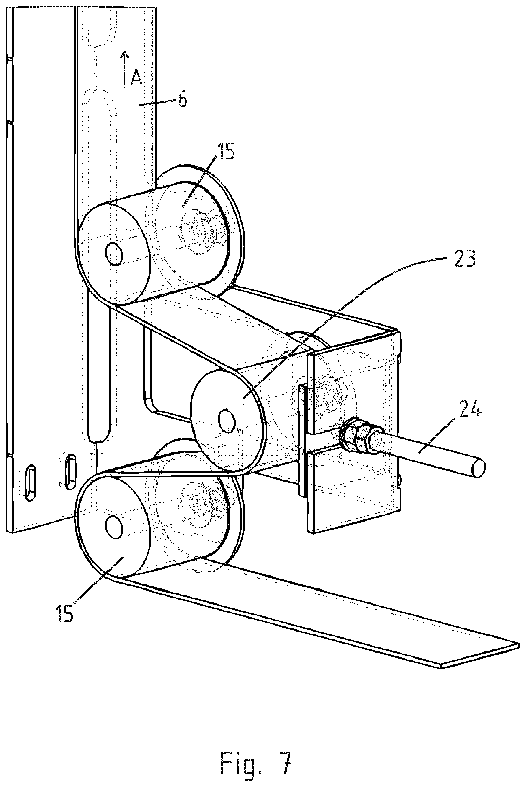

Weiterhin dargestellt ist in Figur 7 die ebenfalls auf die Bildebene in Figur 1 bezogene rechts oben dargestellte Spannrolle 23. Mit der Spannrolle 23 wird es ermöglicht, das Band 6 in jeweiliger Axialrichtung A mit einer Spannung zu beaufschlagen. Eine Längendehnung des Bandes 6 während des Betriebes kann dadurch ausgeglichen werden. Gleichzeitig kann das Band 6 zu Wartungsarbeiten oder Revisionsarbeiten entspannt werden und im Anschluss danach durch Aufbringen einer Spannung wiederum in Betrieb genommen werden. Die Spannrolle 23 selbst ist über eine Einstellschraube 24 verlagerbar, so dass das Band 6 mit einer Spannung, insbesondere einer Vorspannung in seiner Axialrichtung A beaufschlagt werden kann.

### Bezugszeichen:

- 1 -: Lackierkabine
- 2 -: Lackierdüse
- 3 -: Schiene
- 4 -: Schlitten
- 5 -: Halterung
- 6 -: Band
- 7 -: oberer Teil zu 3
- 8 -: unterer Teil zu 3
- 9 -: Öffnung zu 3
- 10 -: Schmutzpartikel
- 11 -: Nut
- 12 -: Lackierraum
- 13 -: Maschinenraum
- 14 -: Antrieb
- 15 -: Umlenkrolle
- 16 -: Führungsrolle
- 17 -: Profile
- 18 -: Profilschiene
- 19 -: Kunststoffschiene
- 20 -: Absauganlage
- 21 -: Filteranlage
- 22 -: Dichtplatte
- 23 -: Spannrolle
- 24 -: Einstellschraube
- 25 -: Seitenwange

- A -: Axialrichtung
- V -: Vertikalrichtung
- T -: Transportband
- B -: Bewegungsrichtung
- B11 -: Breite zu 11
- D6 -: Dicke des Bandes 6
- U -: Umgebung

## Patentansprüche

1. Lackierkabine (1), aufweisend einen Lackierraum (12) wobei in dem Lackierraum (12) ein Unterdruck vorhanden ist und in einem dem Lackierraum (12) benachbarten Maschinenraum (13) ein Überdruck vorhanden ist und in dem Lackierraum (12) mindestens eine auf einer Schiene (3) verlagerbare Lackierdüse (2) angeordnet ist, wobei die Schiene (3) im Querschnitt zumindest längenabschnittsweise zweiteilig ausgebildet ist, wobei zwischen den zwei Teilen (7, 8) eine sich in Längsrichtung erstreckende Öffnung (9) ausgebildet ist, wobei ein Schlitten (4) zur Aufnahme der Lackierdüse (2) in der Öffnung (9) verlagerbar angeordnet ist und ein verlagerbares Band (6) beidseitig des Schlittens (4) angeordnet ist, so dass bei axialer Verlagerung des Schlittens (4) auch das Band (6) verlagert wird und dabei die Öffnung (9) abdichtet **dadurch gekennzeichnet, dass** das Band in einem oberen Teil und einem unteren Teil der Schiene geführt ist, wobei die Führung als Nut dichtend ausgebildet ist.

2. Lackierkabine nach Anspruch 1, **dadurch gekennzeichnet, dass** das Band (6) umlaufend ausgebildet ist und bevorzugt mit dem Schlitten (4) beidseitig gekoppelt ist oder dass der Schlitten (4) auf das Band (6) aufgesetzt ist.

3. Lackierkabine nach Anspruch 1 oder 2, **dadurch gekennzeichnet, dass** im Bereich eines jeden Endes der Schiene (3) eine Umlenkrolle (15) angeordnet ist, so dass das umlaufende Band (6) geführt ist.

4. Lackierkabine nach einem der vorherigen Ansprüche 1 bis 3, **dadurch gekennzeichnet, dass** die Lackierdüse (2) unmittelbar an dem Schlitten (4) gekoppelt ist oder dass die Lackierdüse (2) mittelbar über eine Halterung (5) an dem Schlitten (4) gekoppelt ist.

5. Lackierkabine nach einem der vorherigen Ansprüche 1 bis 4, **dadurch gekennzeichnet, dass** ein Antrieb (14) zur axialen Verlagerung des Schlittens (4) seine Antriebsbewegung über das Band (6) überträgt.

6. Lackierkabine nach einem der vorherigen Ansprüche 1 bis 5, **dadurch gekennzeichnet, dass** das Band (6) als Dichtungsband ausgebildet ist.

7. Lackierkabine nach einem der vorherigen Ansprüche 1 bis 6, dadurchgekennzeichnet, dass das Band (6) aus einem gummiartigen Werkstoff und/oder Kunststoff Werkstoff ausgebildet ist und/oder dass das Band (6) beschichtet ist, bevorzugt mit einer Teflonbeschichtung.

8. Lackierkabine nach Anspruch 1 bis 7, **dadurch gekennzeichnet, dass** die Schiene (3) durch zwei gegenüberliegende, im Querschnitt C-förmige Profilschienen (18) ausgebildet sind, wobei in den Profilschienen (18) jeweils eine Kunststoffschiene (19) formschlüssig aufgenommen angeordnet ist und dass in der Kunststoffschiene (19) eine Nut (11) ausgebildet ist, in der das Band (6) geführt ist.

9. Lackierkabine nach einem der vorherigen Ansprüche 1 bis 8, **dadurch gekennzeichnet, dass** durch die Lackierkabine (1) ein Transportband (T) geführt ist, so dass zu lackierende Gegenstände in die Lackierkabine (1) eingeführt und auch aus dieser herausgeführt werden.

10. Lackierkabine nach Anspruch 1 bis 9, **dadurch gekennzeichnet, dass** an dem Band eine Spannrolle (23) angeordnet ist.

## Claims

1. Paint booth (1), comprising a paint chamber (12), wherein a negative pressure is present in the paint chamber (12) and an excess pressure is present in a machine room (13) adjacent to the paint chamber (12), and at least one paint nozzle (2) which can be displaced on a rail (3) is arranged in the paint chamber (12), wherein the rail (3) is, in cross-section, formed in two parts at least in longitudinal portions thereof, wherein an opening (9) extending in the longitudinal direction is formed between the two parts (7, 8), wherein a carriage (4) for receiving the paint nozzle (2) is displaceably arranged in the opening (9) and a displaceable belt (6) is arranged on both sides of the carriage (4), so that on axial displacement of the carriage (4) the belt (6) is also displaced and thereby seals the opening (9), **characterised in that** the belt (6) is guided in an upper part (7) and a lower part (8) of the rail (3), the guide being constructed in a sealing manner as a groove.

2. Paint booth according to claim 1, **characterised in that** the belt (6) is formed so as to be a circulating belt and is preferably coupled to the carriage (4) on both sides or **in that** the carriage (4) is mounted on the belt (6).

3. Paint booth according to claim 1 or 2, **characterised in that** a deflection roller (15) is arranged in the region of each end of the rail (3) so that the circulating belt (6) is guided.

4. Paint booth according to any one of the preceding claims 1 to 3, **characterised in that** the paint nozzle (2) is coupled directly to the carriage (4) or **in that** the paint nozzle (2) is coupled indirectly to the carriage (4) via a holder (5).

5. Paint booth according to any one of the preceding claims 1 to 4, **characterised in that** a drive (14) for axial displacement of the carriage (4) transmits its drive movement via the belt (6).

6. Paint booth according to any one of the preceding claims 1 to 5, **characterised in that** the belt (6) is formed as a sealing belt.

7. Paint booth according to any one of the preceding claims 1 to 6, **characterised in that** the belt (6) is formed from a rubber-like material and/or plastics material and/or in that the belt (6) is coated, preferably with a Teflon coating.

8. Paint booth according to claim 1 to 7, **characterised in that** the rail (3) are formed by two opposing profile rails (18), which are C-shaped in cross-section, wherein a plastics rail (19) is closely received in each of the profile rails (18) and **in that** a groove (11) is formed in the plastic rail (19), in which groove the belt (6) is guided.

9. Paint booth according to any one of the preceding claims 1 to 8, **characterised in that** a conveyor belt (T) is guided through the paint booth (1), so that objects to be painted are introduced into the paint booth (1) and also guided out of it.

10. Paint booth according to claim 1 to 9, **characterised in that** a tensioning roller (23) is arranged on the belt.

## Revendications

1. Cabine de peinture (1), présentant une chambre de peinture (12) dans laquelle une dépression est présente dans la chambre de peinture (12) et une surpression est présente dans une chambre des machines (13) adjacente à la chambre de peinture (12) et au moins une buse de peinture (2) déplaçable sur un rail (3) est agencée dans la chambre de peinture (12), dans laquelle le rail (3) est réalisé en deux parties au moins par section de longueur dans la coupe transversale, dans laquelle une ouverture (9) s'étendant dans la direction longitudinale est réalisée entre les deux parties (7, 8), dans laquelle un chariot (4) est agencé de manière déplaçable dans l'ouverture (9) pour la réception de la buse de peinture (2) et une bande (6) déplaçable est agencée des deux côtés du chariot (4), si bien qu'en cas de déplacement axial du chariot (4), la bande (6) est également déplacée et étanchéifie ce faisant l'ouverture (9), **caractérisée en ce que** la bande est guidée dans une partie supérieure et une partie inférieure du rail, dans laquelle le guidage est réalisé de manière étanche en tant que rainure.

2. Cabine de peinture selon la revendication 1, **caractérisée en ce que** la bande (6) est réalisée de manière circonférentielle et est couplée de préférence avec le chariot (4) des deux côtés ou que le chariot (4) est posé sur la bande (6).

3. Cabine de peinture selon la revendication 1 ou 2, **caractérisée en ce qu'**une poulie de renvoi (15) est agencée dans la zone de chaque extrémité du rail (3), si bien que la bande (6) circonférentielle est guidée.

4. Cabine de peinture selon l'une quelconque des revendications précédentes 1 à 3, **caractérisée en ce que** la buse de peinture (2) est couplée directement au chariot (4) ou que la buse de peinture (2) est couplée indirectement au chariot (4) par le biais d'un support (5).

5. Cabine de peinture selon l'une quelconque des revendications précédentes 1 à 4, **caractérisée en ce qu'**un entraînement (14) transmet son mouvement d'entraînement par le biais de la bande (6) pour le déplacement axial du chariot (4).

6. Cabine de peinture selon l'une quelconque des revendications précédentes 1 à 5, **caractérisée en ce que** la bande (6) est réalisée en tant que bande d'étanchéification.

7. Cabine de peinture selon l'une quelconque des revendications précédentes 1 à 6, **caractérisée en ce que** la bande (6) est réalisée en un matériau caoutchouteux et/ou matériau plastique et/ou que la bande (6) est revêtue, de préférence d'un revêtement en téflon.

8. Cabine de peinture selon la revendication 1 à 7, **caractérisée en ce que** le rail (3) sont réalisés par deux rails profilés (18) opposés, en forme de C dans la coupe transversale, dans laquelle respectivement un rail en plastique (19) est agencé reçu par complémentarité de forme dans les rails profilés (18) et qu'une rainure (11), dans laquelle la bande (6) est guidée, est réalisée dans le rail en plastique (19).

9. Cabine de peinture selon l'une quelconque des revendications précédentes 1 à 8, **caractérisée en ce qu'**une bande de transport (T) est guidée à travers la cabine de peinture (1), si bien que des objets à peindre sont introduits dans la cabine de peinture (1) et sont également évacués de celle-ci.

10. Cabine de peinture selon la revendication 1 à 9, **caractérisée en ce qu'**une poulie de tension (23) est agencée au niveau de la bande.
